# EUROPEAN PATENT SPECIFICATION

(11) **EP 2 894 029 B1**
(45) Date of publication and mention of the grant of the patent: **12.04.2017**
(21) Application number: 14382004.1
(22) Date of filing: 08.01.2014
(51) Int. Cl.: B32B 5/02, B32B 5/24, B64C 1/00

(54) **FIRE RESISTANT SUSTAINABLE AIRCRAFT INTERIOR PANEL**
FEUERBESTÄNDIGE, NACHHALTIGE FLUGZEUGINNENRAUMPANEELE
PANNEAUX INTÉRIEURS, DURABLES ET IGNIFUGES POUR AVIONS

(43) Date of publication of application: 15.07.2015
(73) Proprietor: The Boeing Company, Chicago, IL 60606-1596 (US)
(72) Inventor: Lapeña-Rey, Nieves, 28015 Madrid (ES); Gonzlez-Garcia, Ana, Madrid (ES); Martin-Alonso, Pedro Pablo, 28850 Madrid (ES); Wonneberger, Maik, 38106 Braunschweig (DE)
(74) Representative: Boult Wade Tennant

(56) References cited:
- EP-A1- 2 644 373
- EP-A2- 1 493 543
- EP-A2- 2 463 083
- DE-A1- 4 226 988
- DE-U1- 29 900 621
- FR-A1- 2 975 041
- FR-A1- 2 978 375
- FR-A1- 2 988 640
- FR-A1- 2 988 642

## Description

### Field of the Invention

The present invention relates to fire resistant sustainable aircraft interior panels comprising a sandwich panel structure. The fire resistant sustainable aircraft interior panels may be used in applications like floors, ceilings, sidewalls and stowage bins.

### Background to the Invention

Sandwich panels are used in many aircraft interior applications, such as floors, sidewalls, ceilings and stowage compartments. These types of sandwich panels may be used in similar applications in other types of transport vehicles. In addition to providing a finishing function, the sandwich panels need to have adequate weight and thickness and possess certain mechanical properties and have sufficient fire resistance.

Of particular interest to the applicant is the use of fire resistant sustainable sandwich panels in aircraft interiors. Consequently, the following description focuses on the application of novel sustainable, or environmentally friendly, sandwich panels in aircraft interiors. It will be abundantly clear that the present invention may extend to fire resistant sustainable sandwich panels in general having the composition of the sustainable aircraft interior panels according to the claims. Such general fire resistant sustainable sandwich panels enjoy far greater applicability than just aircraft interiors and would not require any modification.

Conventional aircraft interior panels are sandwich structures comprising a core sandwiched between outer skins. The materials used in these panels are chosen primarily for their fire resistant properties. For commercial airliners, there are strict regulations governing the fire resistant properties of the materials used in the cabin, along with limits as to the heat and smoke released during combustion of such materials. This has led to the widespread use of glass fibre-reinforced composites based on phenolic resins in conventional aircraft interior parts. In addition to their appropriate fire resistance, the panels based on these composite materials may be moulded into complex shapes, they have a high strength-to-weight ratio, have appropriate flexural strength and impact resistance, have low maintenance costs and are generally easily installed.

In conventional panels, the outer skins comprise phenolic resins and glass fibre pre-pregs. Alternatively, skins may be made from a composite of glass fibre with epoxy or carbon fibre with epoxy. All these skin materials have known environmental limitations. Phenolic resins are regarded as highly noxious and can cause skin problems, such as dermatitis. Glass fibres cause irritation of the skin, eyes and upper respiratory system producing skin eruption similar in appearance to poison ivy, pneumoconiosis and silicosis. If ingested, glass fibres can also cause gastrointestinal conditions.

The core of a conventional panel is usually formed from a Nomex (RTM) honeycomb that contains aramide fibres. These fibres are a heat-resistant synthetic fibre, but have a known disadvantage in that upon fracturing, they produce small fibrils that are harmful to the lungs and cause skin irritation.

The use of such noxious skin and core materials presents difficulties during manufacturing, while heating the resins and where fibres may be exposed after curing, such that careful handling is required. Personal protective equipment is therefore required during manufacturing such panels. This does not apply once the part is made and installed on the aircraft. However, more significant issues arise at the end of the service life of the aircraft where it is scrapped and parts are disposed of. This is of course true for removal and disposal of interior panels at any stage of the aircraft's life, for example during a refit or conversion process. Moreover, the noxious nature of the materials makes the panels poor candidates for recycling and so often end up being sent for burial at landfill. They do not leach but still constitute harmful residues. This is contrary to the aerospace industries current drive for products that achieve a better environmental performance.

The ideal situation would therefore be that in which the sandwich panels are more environmentally friendly while maintaining an excellent technical performance. For example, sandwich panels that are easier to recycle or to dispose would be extremely advantageous. An improvement on conventional sandwich panels has been described in EP-A-2,463,083. This document discloses the use of sustainable materials in sandwich panels, namely a sandwich panel comprising skins formed from natural fibres set within an inorganic thermoset resin or a thermoplastic resins and a core formed from fire resistant balsa wood, a fire resistant paper honeycomb or a fire resistant thermoplastic foam. The present invention provides an alternative form of sustainable sandwich panel.

Further background is provided by DE 299,00,621 U1, DE 42 26 988 A1, FR 2 988 640 A1, FR 2 975 041 A1, FR 2 988 642 A1, FR 2 978 375 A1, EP 2 644 373 A1 and EP 1 493 543 A2.

### Summary of the Invention

Against this background and from a first aspect, the present invention resides in an aircraft interior panel comprising a core sandwiched between first and second skins. The first and second skins both comprise a composite comprising natural fibres set within a biopolymeric resin thereby forming a sustainable aircraft interior panel. The aircraft interior panel further comprises a coating on an outer surface of at least one of the first and second skins to increase the fire resistance of the panel. Thus, a fire resistant sustainable aircraft interior panel is obtained.

The use of a natural biopolymeric resin provides significant "sustainable" benefits in terms of ease of recycling, and also offers other advantages such as reduced weight and lower cost as will be described in more detail below. In addition, biopolymeric resins allow the sandwich panels to be made in ways similar to how conventional sandwich panels are made, and using conventional tooling with only minimal changes in existing infrastructure. The fire resistant protective coating provides the required fire resistance to meet certification requirements for use in aircraft. Optionally, the fire protective coating is halogen free.

The biopolymeric resin comprises a natural thermoset polymer derived from linseed oil. The biopolymeric resin may comprise a viscosity-fixing agent, for example an acrylic acid, a methacrylic acid, a styrene or a hydroxyethyl methacrylate monomer. The biopolymeric resin may comprise an initiator for promoting polymerisation, for example an organic peroxide like methyl ethyl ketone peroxide, benzoyl peroxide or butanone peroxide. These components may be mixed to form the resin. For example, the biopolymeric resin may comprise a mixture of 50% to 80% by weight linseed oil derived thermoset polymer, 10% to 30% hydroxyethyl methacrylate monomer and 1% to 10% initiator.

The fibres are natural fibres. For example, the fibres may be flax although other natural fibres like hemp, sisal and jute may be used. The fibres may be woven into a fabric. The present invention has been found to have utility over a broad range of fibre densities.

The core may comprise a thermoplastic polymer foam, optionally a polyetherimide foam. The core may be a fire resistant thermoplastic foam. An advantage of using a foam core over a conventional honeycomb structure is enhanced soundproofing. When used in aircraft interiors, this can provide a quieter, more pleasant environment for passengers.

For certain applications, the aircraft interior panel may comprise more than three layers, for example if thickness and weight are not prohibitive for the application. For example, in addition to the core, first skin and second skin, the aircraft interior panel may comprise further skins or further cores, or both further skins and cores, or other layers. Other layers may include conventional finishes for decorative purposes or fire retardant coatings. The core may be sandwiched between the first and second skins in all configurations, with first and second skins being arranged outermost in the aircraft interior panel, i.e., the first and second skins provide the outer surfaces of the aircraft interior panel.

The present invention also extends to an aircraft including any of the fire resistant sustainable aircraft interior panels described above. Optionally, the fire resistant sustainable panel is fixed in the aircraft interior such that the fire resistant coating is provided on a surface exposed to a cabin of the aircraft interior.

The present invention also extends to a method of manufacturing any of the aircraft interior panels described above, comprising curing a stack of the natural fibre fabrics, the resin and the core so as to form the aircraft interior panel. Then, the fire resistant protective coating is applied to the outer surface, on the first skin or second skin, depending on the application. For example, the method may comprise spraying the fire resistant coating onto the first and/or second skin. This may be done using an air gun.

The method may comprise forming the biopolymeric resin by mixing a thermoset polymer, for example a natural thermoset polymer, a viscosity-fixing agent and an initiator, impregnating the fibres with the biopolymeric resin, laying up the fibres impregnated with the resin on both sides of the core to form the stack, and curing the stack in one step to form the aircraft interior panel.

Optionally, the method comprises curing the stack using a vacuum bag or a hot mould press.

### Brief Description of the Drawings

In order that the present invention may be more readily understood, preferred embodiments will now be described, by way of example only, with reference to the following drawings in which:
Figure 1 is a perspective view of a fire resistant sustainable aircraft interior panel according to a first embodiment of the current invention;
Figure 2 is a perspective view of a fire resistant sustainable aircraft interior panel according to a second embodiment of the present invention; and
Figure 3 is a schematic representation of a method of assembling a fire resistant sustainable aircraft interior panel according to a first embodiment of the method of the present invention.

### Detailed Description of the Invention

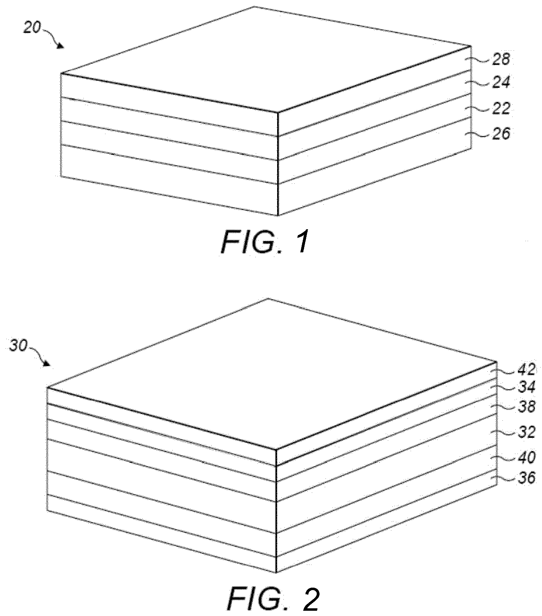

Figure 1 shows a fire resistant sustainable aircraft interior panel 20 according to a first embodiment of the present invention. The fire resistant sustainable aircraft interior panel 20 comprises a core 22 sandwiched between an upper skin 24 and a lower skin 26. A fire resistant protective coating 28 is shown above the upper skin 24. The fire resistant protective coating 28 should preferably be arranged to be the surface exposed to the cabin when the panel is fitted in an aircraft.

The core 22 is a fire resistant thermoplastic foam, for example a polyetherimide foam. Joined to the core 22 are the corresponding upper and lower outer skins 24, 26. Each skin 24, 26 comprises a natural composite material made from natural fibres set within a biopolymer resin. In this exemplary embodiment, flax fibres are woven into a fabric. Other natural fibres like hemp, sisal and jute may be used. The fabric is impregnated with the biopolymer resin, laid up to either side of the core 22 and cured such that the impregnated fabrics form the skins 24, 26 that bond to the core 22 during the curing process.

The present invention is not limited to fire resistant sustainable aircraft interior panel structures comprising only four layers. More than a single core layer may be included, and more than a single skin layer may be included to any one side of the core if the thickness and weight are not prohibitive for the application.

An example of a further fire resistant sustainable aircraft interior panel 30 is shown in Figure 2. The aircraft interior panel 30 comprises six layers that are stacked as follows, from top to bottom: a fire resistant protective coating 42, an outer upper skin 34, an inner upper skin 38, a core 32, an inner lower skin 40 and an outer lower skin 36. The core 32 corresponds to the core 22 described in Figure 1. The fire resistant protective layer 42 corresponds to the fire resistant protective layer 28 described in Figure 1. Also, the skins 34, 36, 38, 40 correspond to the skins 24, 26 described in Figure 1. Pairs of upper and lower skins 34, 38 and 36, 40 may be provided to increase strength if the thickness and weight are not prohibitive for the application. The skins may be laid up in an aligned manner, or with their plies rotated (e.g., the warp and weft of the outer upper skin 34 may have its warp and weft rotated through 90 degrees relative to those of the inner upper skin 38) for improved mechanical properties. The fire resistant sustainable aircraft interior panel of this second embodiment has a fire resistant protective coating 42 on top of the surface exposed to the cabin.

Methods of manufacture of fire resistant sustainable aircraft interior panels according to the present invention will now be described. For the sake of simplicity, four-layer fire resistant sustainable aircraft interior panels will be described, although it will be readily appreciated that the method may be simply extended to fire resistant sustainable panels having more than four layers.

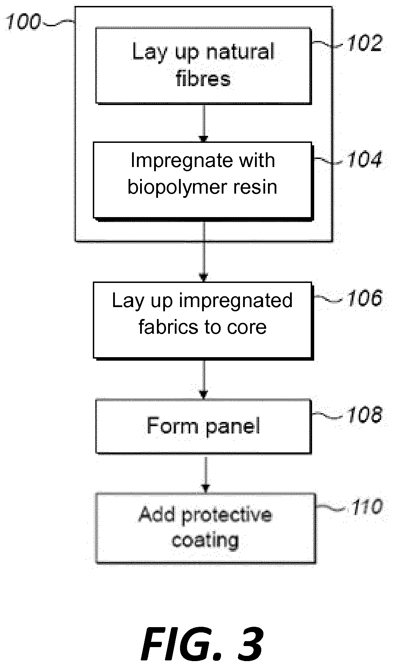

A method of manufacture is shown in Figure 3. At 100, the materials that form the skins 24, 26 are formed and arranged. This step 100 comprises laying up natural fibre fabrics, as indicated at 102. For example, one layer of flax fabric is laid up for each skin 24, 26.

At 104, a biopolymer resin impregnates the natural fibre fabrics. The biopolymer resin may be prepared as follows: a mixture is formed of a natural thermoset polymer, a viscosity-fixing agent and an initiator. The natural thermoset polymer is a linseed oil polymer, such as Mecryl LT. Other suitable choices for the natural thermoset polymer include soya oil resin or bio-based epoxy resins, although such choices fall outside the scope of the present invention. The natural thermoset resin may be mixed to a proportion of 50% to 80% by weight. The viscosity-fixing agent may be a (hydroxyethyl) methacrylate monomer, also known as HEMA. Other suitable choices include acrylic acid, methacrylic acid or styrene. The viscosity-fixing agent may be mixed to a proportion of 10% to 30% by weight. The initiator is a chemical additive that promotes the polymerisation reaction of the biopolymer. A suitable choice is Initiator BK. Other suitable choices include organic peroxides like methyl ethyl ketone peroxide, benzoyl peroxide or butanone peroxide. The initiator may be mixed to a proportion of 1% to 10% by weight.

The impregnated fibre fabrics that will form the skins 24, 26 are laid up on both sides of the core 22, as shown at step 106. The resin acts as an adhesive to bond the impregnated fibre fabrics to core 22. At 108, this assembly is transferred to a vacuum bag or a hot press such that the complete sandwich panel 20 may be formed when heated at 140-150ºC for 15 minutes while applying pressure either with a vacuum bag or a hot press. Thus, a panel 20 may be formed every 15 minutes according to this one step forming process. It will be appreciated that the method of manufacture described above is similar to the conventional crush core process. Hence, advantageously, only minimal changes are needed to tooling and production methods to accommodate manufacture of these novel fire resistant sustainable sandwich panels.

Subsequently, the upper skin 24 of the panel formed in 108 is provided with a halogen-free fire resistant protective coating 110. An advantage of using a fire resistant coating is that it removes the need to impregnate the natural fibres with a flame retardant solution prior to impregnating them with the biopolymer resin. That is, the natural fibres do not need to be soaked in a flame retardant. The resulting panel 20 is found to be lighter yet still offer the same high level of fire resistance.

The coating 28 is sprayed onto the upper skin 24 of the cured panel 20 using an air gun. The coating 28 is sprayed to an amount of 300 to 400 g/m², and typically takes only one or two minutes. The coating 28 is then dried at room temperature for 24 hours. The dried thickness of the coating 28 is approximately 150 nm.

Furthermore, other coatings maybe applied to the protective coating 28, for example decorative coatings to provide a desired colour, pattern or texture.

It will be clear to the skilled person that variations may be made to the above embodiments without necessarily departing from the scope of the invention that is defined by the appended claims.

For example, the methods described above with respect to four-layer fire resistant sustainable aircraft interior panels 20 may be readily adapted to more than four-layer fire resistant sustainable aircraft interior panels. For example, the number of skin layers laid up on the core may be increased from one each side if thickness and weight are not prohibitive for the application. More than a single core layer may also be included.

Various fire resistant sustainable aircraft interior panels and various methods of manufacture have been described. It will be appreciated that the different methods may be applied to make any of the different fire resistant sustainable panels described.

## Claims

1. An aircraft interior panel comprising a core (22; 32) sandwiched between first (24; 34) and second (26; 36) skins, wherein the first and second skins both comprise a composite comprising natural fibres set within a biopolymeric resin thereby forming a sustainable aircraft interior panel, and wherein the aircraft interior panel further comprises a coating (28) on an outer surface of at least one of the first and second skins to increase the fire resistance of the panel thereby providing a fire resistant sustainable panel;
**characterized in that**:
the biopolymeric resin comprises a linseed oil derived natural thermoset polymer.

2. The fire resistant sustainable aircraft interior panel of claim 1, wherein the biopolymeric resin comprises a viscosity-fixing agent, optionally a hydroxyethyl methacrylate monomer.

3. The fire resistant sustainable aircraft interior panel of claim 1 or claim 2, wherein the biopolymeric resin comprises an initiator for promoting polymerisation.

4. The fire resistant sustainable aircraft interior panel of any preceding claim, wherein the natural fibres are flax.

5. The fire resistant sustainable aircraft interior panel of any preceding claim, wherein the core comprises a thermoplastic polymer foam, optionally a polyetherimide foam.

6. An aircraft comprising one or more fire resistant sustainable aircraft interior panels according to any preceding claim.

7. The aircraft of claim 6, wherein the fire resistant sustainable panel is fixed in the aircraft interior such that the fire resistant coating is provided on a surface exposed to a cabin of the aircraft interior.

8. A method of manufacturing the fire resistant sustainable aircraft interior panel of any of claims 1 to 5, comprising curing a stack of the natural fibre fabrics, the resin and the core so as to form the aircraft interior panel, and applying the fire resistant protective coating to the outer surface of the at least one of the first and second skins (110).

9. The method of claim 8, comprising mixing a thermoset polymer, a viscosity-fixing agent and an initiator to form the biopolymeric resin, impregnating the fibres with the biopolymeric resin (104), laying up the fibres impregnated with the resin on both sides of the core to form the stack (106), and curing the stack in one step to form the aircraft interior panel.

10. The method of claim 8, wherein the fibres comprise a woven fabric.

11. The method of any claims 8 to 10, comprising curing by using a vacuum bag or a hot press.

## Patentansprüche

1. Luftfahrzeuginnenraumpaneel, das einen Kern (22; 32) aufweist, der zwischen einer ersten (24; 34) und einer zweiten (26; 36) Haut eingefasst ist, wobei die erste und die zweite Haut jeweils ein Verbundmaterial umfassen, das in einem Biopolymerharz eingebettete Naturfasern aufweist, wodurch ein nachhaltiges Luftfahrzeuginnenraumpaneel gebildet wird, und wobei das Luftfahrzeuginnenraumpaneel an einer äußeren Oberfläche der ersten und/oder zweiten Haut ferner eine Beschichtung (28) aufweist, um die Feuerbeständigkeit des Paneels zu verbessern und hierdurch ein feuerbeständiges nachhaltiges Paneel zu schaffen;
**dadurch gekennzeichnet, dass**:
das Biopolymerharz ein von Leinöl abgeleitetes natürliches wärmehärtendes Polymer aufweist.

2. Feuerbeständiges nachhaltiges Luftfahrzeuginnenraumpaneel nach Anspruch 1, wobei das Biopolymerharz ein viskositätseinstellendes Mittel, optional ein Hydroxyethylmethacrylatmonomer, aufweist.

3. Feuerbeständiges nachhaltiges Luftfahrzeuginnenraumpaneel nach Anspruch 1 oder Anspruch 2, wobei das Biopolymerharz einen Initiator zur Förderung der Polymerisation aufweist.

4. Feuerbeständiges nachhaltiges Luftfahrzeuginnenraumpaneel nach einem der vorhergehenden Ansprüche, wobei es sich bei den Naturfasern um Flachs handelt.

5. Feuerbeständiges nachhaltiges Luftfahrzeuginnenraumpaneel nach einem der vorhergehenden Ansprüche, wobei der Kern einen thermoplastischen Polymerschaum, optional einen Polyetherimidschaum aufweist.

6. Luftfahrzeug, das einen oder mehrere feuerbeständige nachhaltige Paneele nach einem der vorhergehenden Ansprüche aufweist.

7. Luftfahrzeug nach Anspruch 6, wobei das feuerbeständige nachhaltige Luftfahrzeuginnenraumpaneel so im Innenraum des Luftfahrzeugs angebracht ist, dass die feuerbeständige Beschichtung an einer im Innenraum einer Luftfahrzeugkabine freiliegenden Oberfläche ausgebildet ist.

8. Verfahren zur Herstellung eines feuerbeständigen nachhaltigen Luftfahrzeuginnenraumpaneels nach einem der Ansprüche 1 bis 5, das umfasst, einen Stapel aus dem Naturfaserstoff, dem Harz und dem Kern zum Ausbilden des Luftfahrzeuginnenraumpaneels zu härten und die feuerbeständige Schutzbeschichtung auf die äußere Oberfläche der ersten und/oder zweiten Haut (110) aufzutragen.

9. Verfahren nach Anspruch 8, das umfasst, ein wärmehärtendes Polymer, ein viskositätseinstellendes Mittel und einen Initiator zur Ausbildung des Biopolymerharzes zu mischen, die Fasern mit dem Biopolymerharz (104) zu imprägnieren, die mit dem Harz imprägnierten Fasern zur Bildung des Stapels (106) auf beide Seiten des Kerns aufzulegen und den Stapel in einem Schritt zur Ausbildung des Luftfahrzeuginnenraumpaneels zu härten.

10. Verfahren nach Anspruch 8, wobei die Fasern ein Gewebe aufweisen.

11. Verfahren nach einem der Ansprüche 8 bis 10, das ein Härten unter Verwendung eines Vakuumsacks oder einer Heißpresse umfasst.

## Revendications

1. Panneau intérieur d'aéronef comprenant un noyau (22 ; 32) enserré entre des première (24 ; 34) et seconde (26 ; 36) peaux, dans lequel les première et seconde peaux comprennent toutes deux un composite comprenant des fibres naturelles établies dans une résine biopolymère, en formant ainsi un panneau intérieur d'aéronef durable, et dans lequel le panneau intérieur d'aéronef comprend en outre un revêtement (28) sur une surface extérieure d'au moins l'une des première et seconde peaux pour augmenter la résistance au feu du panneau, en fournissant ainsi un panneau résistant au feu durable ;
**caractérisé en ce que** :
la résine biopolymère comprend un polymère thermodurci naturel dérivé d'huile de lin.

2. Panneau intérieur d'aéronef durable résistant au feu selon la revendication 1, dans lequel la résine biopolymère comprend un agent de fixation de viscosité, facultativement un monomère de méthacrylate d'hydroxyéthyle.

3. Panneau intérieur d'aéronef durable résistant au feu selon la revendication 1 ou 2, dans lequel la résine biopolymère comprend un initiateur pour favoriser une polymérisation.

4. Panneau intérieur d'aéronef durable résistant au feu selon l'une quelconque des revendications précédentes, dans lequel les fibres naturelles sont du lin.

5. Panneau intérieur d'aéronef durable résistant au feu selon l'une quelconque des revendications précédentes, dans lequel le noyau comprend une mousse de polymère thermoplastique, facultativement une mousse de polyétherimide.

6. Aéronef comprenant un ou plusieurs panneaux intérieurs d'aéronef durables résistant au feu selon l'une quelconque des revendications précédentes.

7. Aéronef selon la revendication 6, dans lequel le panneau durable résistant au feu est fixé dans l'intérieur de l'aéronef de telle sorte que le revêtement résistant au feu est fourni sur une surface exposée à une cabine de l'intérieur d'aéronef.

8. Procédé de fabrication du panneau intérieur d'aéronef durable résistant au feu selon l'une quelconque des revendications 1 à 5, comprenant le durcissement d'une pile constituée de tissus en fibres naturelles, de la résine et du noyau de manière à former le panneau intérieur d'aéronef, et l'application du revêtement protecteur résistant au feu sur la surface extérieure d'au moins une des première et seconde peaux (110).

9. Procédé selon la revendication 8, comprenant le mélange d'un polymère thermodurci, un agent de fixation de viscosité et d'un initiateur pour former la résine biopolymère, l'imprégnation des fibres avec la résine biopolymère (104), la disposition des fibres imprégnées de résine sur les deux côtés du noyau pour former la pile (106), et le durcissement de la pile en une étape pour former le panneau intérieur d'aéronef.

10. Procédé selon la revendication 8, dans lequel les fibres constituent un tissu tissé.

11. Procédé selon l'une quelconque des revendications 8 à 10, comprenant le durcissement à l'aide d'une poche à vide ou d'une presse à chaud.
